# EUROPÄISCHE PATENTSCHRIFT

(11) **EP 1 417 641 B1**
(45) Veröffentlichungstag und Bekanntmachung des Hinweises auf die Patenterteilung: **08.12.2004**
(21) Anmeldenummer: 02758370.7
(22) Anmeldetag: 19.07.2002
(51) Int. Cl.: G06K 19/077, G06K 7/10

(54) **CHIPKARTE MIT EINEM PROJEKTIONSSPIEGEL**
CHIP-CARD WITH A PROJECTOR MIRROR
CARTE A PUCE POURVUE D'UN MIROIR DE PROJECTION

(30) Priorität: 09.08.2001 DE 10139063
(43) Veröffentlichungstag der Anmeldung: 12.05.2004
(73) Patentinhaber: Infineon Technologies AG, 81669 München (DE)
(72) Erfinder: LAACKMANN, Peter, 81541 München (DE); RUEPING, Stefan, 84435 Lengdorf (DE)
(74) Vertreter: Schoppe, Fritz, Dipl.-Ing.
(86) Internationale Anmeldenummer: PCT/EP2002/008089
(87) Internationale Veröffentlichungsnummer: WO 2003/015022

(56) Entgegenhaltungen:
- EP-A- 0 498 582
- EP-A- 0 508 100
- EP-A- 1 168 231
- US-A- 4 783 598

## Beschreibung

Die vorliegende Erfindung bezieht sich auf eine Chipkarte und insbesondere auf eine Chipkarte mit einem integrierten bewegbaren Spiegel.

Chipkarten finden eine immer größere Verbreitung mit zahlreichen Anwendungen, beispielsweise als Telephonkarten für öffentliche Fernsprecher oder als Zahlungsmittel in Form von EC-Karten (Electronic Cash-Karten) oder Geldkarten. Dabei ist es bei vielen Anwendungen wünschenswert, daß Informationen, welche auf der Chipkarte gespeichert sind, beispielsweise ein Guthaben auf einer Geldkarte, einem Anwender angezeigt werden können. Die optische Ausgabe von Text, Daten oder Graphiken durch eine Chipkarte selbst beschränkt sich heute auf in der Karte einlaminierte Anzeigen bzw. Displays, beispielsweise Flüssigkristallanzeigen. Diese sind, um eine ausreichende mechanische Stabilität zu gewährleisten, noch sehr klein, wodurch eine Wiedergabe von umfangreicheren Texten oder Graphiken nahezu unmöglich ist. Denkbar ist, daß zukünftig die gesamte Oberfläche der Chipkarte mit einer Displayfolie bzw. Anzeigefolie versehen ist. Auch in diesem Fall ist die Wiedergabefläche jedoch immer auf das ISO-Format der Chipkarte beschränkt.

EP-A-0 508 100 offenbart eine Chipkarte mit einem Substrat, einem Spiegel, der bewegbar bezüglich des Substrats gehalten ist, einem mikromotorischen Element, das mit einem Reflektor verbunden ist und mit einem Prozessor zum Ansteuern des mikromotorischen Elements, um den Reflektor gemäß Ausgabedaten zu bewegen und so einen Lichtstrahl selektiv auf eine Projektionsfläche zu lenken. Der Lichtstrahl wird in einem Lasegerät auf den Reflektor gerichtet, und gemäß Ausgabedaten auf Sensoren reflektiert.

Ein weiterer wichtiger Aspekt bei der Darstellung von Informationen, die auf der Chipkarte gespeichert sind, ist die Sicherheit gegen eine Manipulation der Daten. Verlassen Informationen den Chipkartencontroller, so müssen sie gegen Manipulationen geschützt werden.

Die Aufgabe der vorliegenden Erfindung besteht darin, eine verbesserte Chipkarte und eine verbesserte Chipkartenlesevorrichtung für eine Chipkarte zu schaffen, mittels derer ein Bild darstellbar ist.

Diese Aufgabe wird durch eine Chipkarte gemäß Anspruch 1 und durch eine Chipkartenlesevorrichtung gemäß Anspruch 10 gelöst.

Gemäß der vorliegenden Erfindung umfaßt eine Chipkarte zum Erzeugen einer Zweidimensionalen Bild-Projektion ein Substrat, einen Spiegel, der bezüglich des Substrats um zwei Achsen dreh-bewegbar gehalten ist, einen Aktor zum Bewegen des Spiegels bezüglich des Substrats um die zwei Achsen und einen Prozessor zum Verarbeiten von Bildinformationen zum Ansteuern des Aktors, um den Spiegel gemäß den Bildinformationen zu bewegen, um die Zweidimensionalen Bildprojektion zu erzeugen.

Vorzugsweise ist der Aktor an dem Substrat befestigt, und ferner ist der Spiegel vorzugsweise so an oder in der Chipkarte angebracht, daß er von außen sichtbar ist. Ferner weist eine Chipkarte gemäß der vorliegenden Erfindung vorzugsweise einen Speicher und/oder einen Eingang für Bildinformationen auf.

Ferner kann eine Chipkarte gemäß der vorliegenden Erfindung einen steuerbaren Lichtverschluß aufweisen, der in einem Lichtweg angeordnet ist, entlang dessen sich ein Lichtstrahl ausbreiten kann, der auf den Spiegel auftrifft und von dort reflektiert wird. Alternativ oder zusätzlich kann die Chipkarte einen elektrischen Kontakt aufweisen, über den die Chipkarte mit einer Lichtquelle verbindbar ist, wobei der Prozessor ferner dafür vorgesehen ist, ein Lichtquellensteuersignal an dem elektrischen Kontakt anzulegen.

Vorzugsweise ist der Spiegel der Chipkarte einer Oberfläche der Chipkarte zugewandt, an der die Chipkarte keine elektrischen Kontakte aufweist.

Gemäß der vorliegenden Erfindung umfaßt eine Chipkartenlesevorrichtung eine Chipkartenhalteeinrichtung und eine Lichtquellenhalteeinrichtung zum Halten einer Lichtquelle, die einen Lichtstrahl erzeugt, wobei die Chipkartenhalteeinrichtung und die Lichtquellenhalteeinrichtung so angeordnet sind, daß der Lichtstrahl auf einen Spiegel einer Chipkarte fallen kann, wenn die Chipkarte in der Chipkartenhalteeinrichtung gehalten wird, und daß ein von dem Spiegel reflektierter Lichtstrahl auf eine beliebige Projektionsfläche, welche Teil der Chipkartenlesevorrichtung sein kann, fallen kann.

Die Chipkartenhalteeinrichtung der erfindungsgemäßen Chipkartenlesevorrichtung ist so ausgebildet, daß sie die Chipkarte derart halten kann, daß der Spiegel der Chipkarte von außen sichtbar ist. Dazu kann die Chipkartenhalteeinrichtung beispielsweise einen Schlitz aufweisen, welcher die Chipkarte nur so weit aufnimmt, daß der Spiegel von außen sichtbar ist.

Bei der erfindungsgemäßen Chipkartenlesevorrichtung sind die Chipkartenhalteeinrichtung und die Lichtquellenhalteeinrichtung vorzugsweise so ausgebildet, daß die Chipkartenhalteeinrichtung die Chipkarte und die Lichtquellenhalteeinrichtung die Lichtquelle so halten können, daß ein Winkel zwischen dem Lichtstrahl und dem Spiegel größer als 0 Grad und kleiner als 90 Grad ist, wobei der Winkel besonders bevorzugt 45 Grad beträgt.

Vorzugsweise ist die Lichtquelle ein Laser oder ein Laserpointer. Die Chipkartenhalteeinrichtung und die Lichtquellenhalteeinrichtung sind vorzugsweise so ausgebildet, daß die Lichtquellenhalteeinrichtung die Lichtquelle so aufnehmen kann, daß der Lichtstrahl durch die Chipkartenhalteeinrichtung nicht beeinträchtigt wird, wenn keine Chipkarte in die Chipkartenhalteeinrichtung eingesetzt ist.

Gemäß einem bevorzugten Ausführungsbeispiel der vorliegenden Erfindung weist die Chipkartenlesevorrichtung ferner einen Diodenlaser auf, der von der Lichtquellenhalteeinrichtung gehalten ist, und die Lichtquellenhalteeinrichtung weist ein Scharnier auf, über das die Chipkartenhalteeinrichtung und der Diodenlaser bewegbar miteinander verbunden sind.

Gemäß einem weiteren bevorzugten Ausführungsbeispiel der vorliegenden Erfindung ist die Chipkartenlesevorrichtung als Chipkarten-Terminal ausgeführt und umfaßt eine Lichtquelle, die durch die Lichtquellenhalteeinrichtung gehalten ist, eine Einrichtung zum Feststellen, ob die Chipkarte für die Chipkartenlesevorrichtung zugelassen ist, und eine Einrichtung zum Freigeben bzw. Anschalten der Lichtquelle.

Anders ausgedrückt beschreibt die vorliegende Erfindung eine Chipkarte mit einem integrierten Laserprojektor. Auf dem Chipkartencontroller ist ein mikromechanisch bewegbarer Spiegel integriert, welcher einen eintreffenden Laserstrahl mit hoher Frequenz ablenken kann, um mittels des abgelenkten Laserstrahles Text, Daten oder Graphik auf eine beliebige Projektionsfläche zu projizieren. Die Projektionsfläche kann dabei einige Quadratmeter groß sein und entweder, beispielsweise in Form eines Projektionsschirmes in einer Chipkartenlesevorrichtung, als solche vorgesehen sein, oder aber es kann sich um eine beliebige, hauptsächlich für andere Zwecke vorgesehene Fläche handeln, beispielsweise ein Blatt Papier oder eine Wand eines Zimmers.

Ein Vorteil der erfindungsgemäßen Chipkarte ist, daß der Spiegel wesentlich kleiner sein kann, als eine durch ihn erzeugte Projektion von Test, Daten oder Graphik auf eine Projektionsfläche. Insbesondere kann der Spiegel deshalb so klein sein, daß er vor einer mechanischen Beschädigung oder Zerstörung einfach geschützt werden kann und eine Manipulation erheblich erschwert ist.

Ein weiterer Vorteil der vorliegenden Erfindung besteht darin, daß der Spiegel als mikromechanisches Bauglied bzw. als Mikroaktuator kostengünstig als Halbleiterbauelement hergestellt werden kann und ferner mit dem Chipkartencontroller bzw. dem Prozessor der Chipkarte integriert sein kann. Eine einstückige Ausführung des Spiegels mit dem Aktor und dem Prozessor bietet eine weitere erhebliche Verbesserung der Sicherheit vor Manipulationen.

Ein besonderer Vorteil der vorliegenden Erfindung besteht darin, daß der Mikrocontroller bzw. Prozessor der Chipkarte die Daten-/Graphik-Projektion selbst ausführt, so daß eine Verfälschung der ausgegebenen Daten extrem schwierig ist. Ein besonders gesichertes Terminal ist nicht nötig. Es kann eine sehr einfache Anordnung eines herkömmlichen Diodenlasers, wie er z. B. für Laserpointer verwendet wird, zusammen mit einem sehr preisgünstigen Chipkartenlesegerät zum Einsatz kommen. Für einen Anwender ist eindeutig zu erkennen, daß die angezeigte Ausgabe in Form des projizierten Textes oder der projizierten Graphik nicht von dem Terminal sondern direkt von der Chipkarte erzeugt werden. Die Ausgabe ist damit besonders vertrauenswürdig, und auf einen Einsatz eines teueren, manipulierungssicheren Terminals kann verzichtet werden.

Ein erfindungsgemäßes Chipkarten-Terminal kann einen modulierbaren Diodenlaser aufweisen. Das Chipkarten-Terminal kann eine Chipkarte mechanisch festhalten, diese mit elektrischer Leistung versorgen und stellt ferner mit Hilfe des modulierbaren Diodenlasers einen Laserstrahl zur Verfügung, der von der Chipkarte digital moduliert und abgelenkt werden kann. Zur Modulation kann der Laserstrahl entweder durch einen Eingabe-/Ausgabe-Kontakt (E/A-Kontakt) der Chipkarte ein- und ausgeschaltet werden, oder der Laserstrahl wird auf der Chipkarte durch einen Lichtverschluß, beispielsweise in Form eines Flüssigkristall-Verschlusses (LCD-Shutter; LCD = Liquid Crystal Display) vor dem Spiegelsystem ausgeblendet. Dazu genügt eine einfache Modifikation eines herkömmlichen Präsentations-Laserpointers.

Bevorzugte Ausführungsbeispiele der vorliegenden Erfindung werden nachfolgend Bezug nehmend auf die beiliegenden Figuren näher erläutert. Es zeigen:
- Fig. 1: eine schematische Darstellung eines bevorzugten Ausführungsbeispieles einer Chipkarte gemäß der vorliegenden Erfindung;
- Fig. 2: eine schematische Darstellung eines bevorzugten Ausführungsbeispieles einer Chipkartenlesevorrichtung gemäß der vorliegenden Ausführung; und
- Fig. 3: eine schematische Darstellung eines weiteren bevorzugten Ausführungsbeispieles einer Chipkartenlesevorrichtung gemäß der vorliegenden Erfindung.

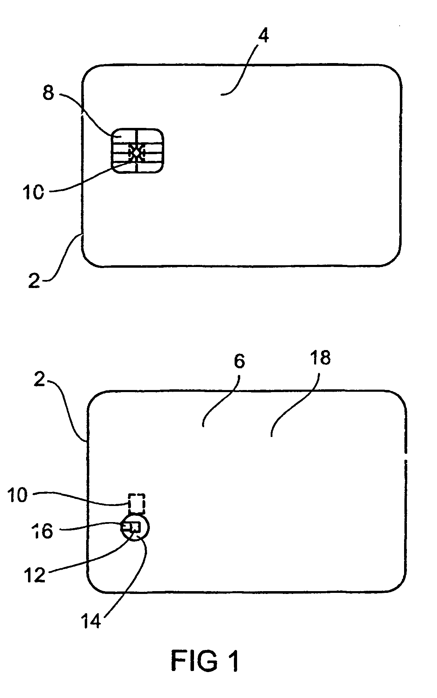

Fig. 1 ist eine schematische Darstellung einer Chipkarte 2 gemäß einem bevorzugten Ausführungsbeispiel der vorliegenden Erfindung. Die Chipkarte 2 weist eine erste Oberfläche 4, deren Draufsicht im oberen Teil der Fig. 1 dargestellt ist, und eine zweite Oberfläche 6, deren Draufsicht im unteren Teil der Fig. 1 dargestellt ist, auf. An der ersten Oberfläche 4 weist die Chipkarte 2 eine Mehrzahl von elektrisch leitfähigen Kontaktflächen 8 auf, die mit einem darunterliegenden, d. h. zwischen der ersten Oberfläche 4 und der zweiten Oberfläche 6 der Chipkarte 2 angeordneten Prozessor 10, dessen Umrisse in Fig. 1 gestrichelt dargestellt sind, elektrisch verbunden sind. Ferner weist die Chipkarte 2 einen Spiegel 12 auf, welcher lateral benachbart zu dem Prozessor 10 zwischen der ersten Oberfläche 4 und der zweiten Oberfläche 6 der Chipkarte 2 angeordnet ist und um zwei Achsen drehbewegbar ist. Die zweite Oberfläche 6 weist im Bereich des Spiegels 12 eine mit einem transparenten Fenster mechanisch verschlossene Öffnung 14 auf. Ein Aktor 16 ist mechanisch einerseits mit dem Spiegel 12 und andererseits mit dem Substrat 18 und elektrisch mit dem Prozessor 10 verbunden.

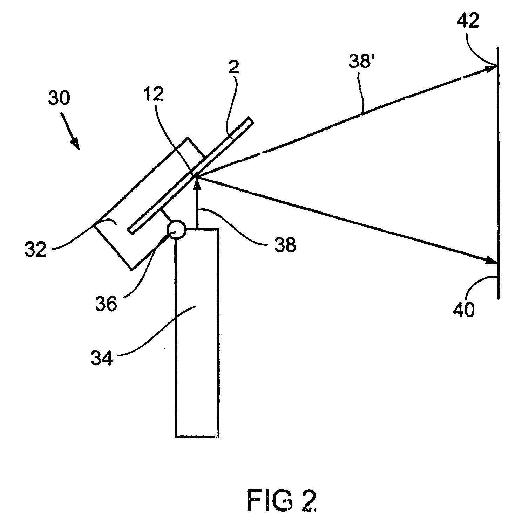

Die elektrisch leitfähigen Kontaktflächen 8 dienen als elekfrische Schnittstelle des Prozessors 10, über die der Prozessor von außen, beispielsweise von einer Chipkartenlesevorrichtung oder einem Terminal mit elektrischer Leistung versorgt werden kann, und über die Daten zwischen dem Prozessor 10 und der Chipkartenlesevorrichtung bzw. dem Terminal ausgetauscht werden können. Der Aktor 16 ist durch den Prozessor 10 elektrisch steuerbar, um den Spiegel 12 bezüglich des Substrats 18 der Chipkarte 2 zu bewegen. Neben den in herkömmlichen Chipkarten implementierten Funktionen, beispielsweise zur Autentifikation der Chipkarte oder eines Anwenders der Chipkarte oder einer Speicherung von Daten, weist der Prozessor 10 der Chipkarte 2 gemäß der vorliegenden Erfindung Funktionen zum Verarbeiten von Bildinformationen und zum Ansteuerung des Aktors 16 auf, um den Spiegel 12 gemäß den Bildinformationen zu bewegen, um durch eine durch den Spiegel 12 bewirkte Projektion eines Lichtstrahles auf eine Projektionsfläche eine Darstellung von Text, Graphik und anderen Arten von Daten zu erzeugen. Einzelheiten der Projektion werden unten anhand der Fig. 2 näher beschrieben

Fig. 2 ist eine schematische Darstellung einer Chipkartenlesevorrichtung 30 gemäß einem bevorzugten Ausführungsbeispiel der vorliegenden Erfindung. Die Chipkartenlesevorrichtung 30 umfaßt eine Chipkartenhalteeinrichtung 32, die so ausgebildet ist, daß sie eine Chipkarte 2 mechanisch halten kann, und einen Laser 34, der über ein Scharnier 36 klappbar mit der Chipkartenhalteeinrichtung 32 verbunden ist.

Die Chipkartenhalteeinrichtung 32 ist so ausgebildet, daß sie eine Chipkarte 2, wie sie in Fig. 1 dargestellt ist, mechanisch halten und über deren Kontaktflächen 8 mit elektrischer Leistung versorgen kann. Der Laser 34 kann einen Lichtstrahl 38 erzeugen, wobei die Chipkartenhalteeinrichtung 32 und der Laser 34 mittels des Scharniers 36 so zueinander ausgerichtet sind, daß der Lichtstrahl 38 des Lasers 34 auf den Spiegel 12 der Chipkarte 2 fällt, wenn diese in die Chipkartenhalteeinrichtung 32 eingesetzt ist. Das Scharnier 36 weist zu diesem Zweck vorzugsweise eine nicht dargestellte Arretierungseinrichtung auf, mittels derer die Chipkartenhalteeinrichtung 32 und der Laser 34 in einem erwünschten Winkel zueinander fixiert werden können. In diesem Fall lenkt der Spiegel 12 den Lichtstrahl 38 ab bzw. reflektiert ihn. Die Richtung des abgelenkten bzw. reflektierten Lichtstrahls 38' ist dabei von der Anordnung des Spiegels 12 abhängig, welche wiederum durch den Prozessor 10 gesteuert durch den Aktor 16 der Chipkarte 2 verändert werden kann. Ein Anwender kann die Chipkartenlesevorrichtung 30 in der Hand halten und gegenüber einer ihm geeignet erscheinenden Projektionsfläche 40, beispielsweise einem Blatt Papier oder einer Hauswand, so anordnen, daß der abgelenkte Lichtstrahl 38' auf der Projektionsfläche 40 einen sichtbaren Lichtpunkt 42 erzeugt.

Zur Darstellung von Daten in Form von Text oder Graphik steuert der Prozessor 10 den Aktor 16 so, daß sich der Spiegel 12 mit hoher Frequenz um zwei Achsen rotatorisch hin und her bewegt. Dementsprechend ändert sich die Richtung des von dem Spiegel 12 abgelenkten Lichtstrahles 38' und der Ort des durch den abgelenkten Lichtstrahl 38' auf der Projektionsfläche 40 erzeugten Lichtpunktes. Durch eine mit ausreichender Frequenz, beispielsweise 20 Hz, wiederholte Bewegung des Lichtpunktes 42 über die Projektionsfläche 40 entsteht beim menschlichen Betrachter, beispielsweise dem Anwender der Chipkartenlesevorrichtung 30, der Eindruck eines Bildes.

Dabei gibt es mehrere Möglichkeiten, die Lichtpunkte 42 so zu erzeugen, daß ein Bild entsteht. Wenn der Laser 34 ununterbrochen einen Lichtstrahl 38 emittiert, kann der Spiegel 12 durch den Prozessor 10 so gesteuert werden, daß der abgelenkte Lichtstrahl 38' die Projektsfläche 40 nur an den Orten trifft oder nur an den Orten für eine für das menschliche Auge wesentliche Zeit trifft, an denen ein sichtbarer Lichtpunkt 42 erscheinen soll, wobei der Spiegel 12 so bewegt wird, daß der abgelenkte Lichtstrahl 38' Bildflächen auf der Projektionsfläche 40, welche dunkel erscheinen sollen, entweder umfährt oder sehr schnell überstreicht. Diese Art der Erzeugung eines dem menschlichen Auge unbewegt oder langsam bewegt erscheinenden Gesamtbildes ähnelt derjenigen in einem alten, analogen Oszilloskop, in dem ein Elektronenstrahl durch elektrische oder magnetische Felder abgelenkt schnell wiederholt genau diejenigen Bereiche einer Bildfläche einer Brownschen Röhre beschreibt, die einem Betrachter hell erscheinen sollen.

Alternativ kann in der Chipkarte 2 an der zweiten Oberfläche 6 im Bereich des Spiegels 12 einen Lichtverschluß angeordnet sein, der durch den Prozessor 10 steuerbar ist, beispielsweise einen Flüssigkristall-Verschluß (LCD-Shutter; LCD = Liquid Crystal Display). In diesem Fall tastet der abgelenkte Lichtstrahl 38' gelenkt durch den Spiegel 12 die Projektionsfläche 40 vorzugsweise zeilenförmig ab, ähnlich wie der Elektronenstrahl einer Fernseh-Kathodenstrahlröhre die Bildfläche beschreibt. Mittels des Lichtverschlusses kann der Prozessor 10 den Lichtstrahl 38 vor der Reflexion an dem Spiegel 12 und/oder den abgelenkten Lichtstrahl 38' nach der Reflexion an dem Spiegel 12 abschatten, um dunkle Bildbereiche auf der Projektionsfläche 40 zu erzeugen.

Eine weitere Alternativ besteht darin, daß der Prozessor 10 die Lichtemission des Lasers 34 steuert. Dies geschieht vorzugsweise mittels eines Lichtquellensteuersignales, das der Prozessor 10 der Chipkarte 2 erzeugt und an eine der Kontaktflächen 8 der Chipkarte 2 anlegt, wobei die Chipkartenhalteeinrichtung 32 das Lichtquellensteuersignal von dieser Kontaktfläche 8 abgreift und dem Laser 34 zuführt, um dessen Lichtemission zu steuern, beispielsweise durch An- und Ausschalten seiner Leistungsversorgung. Ähnlich wie bei dem unmittelbar vorangehend beschriebenen Bilderzeugungsverfahren wird der Spiegel 12 durch den Prozessor 10 auch in diesem Fall so gesteuert, daß der vom Spiegel 12 abgelenkte Lichtstrahl 38' die gesamte Bildfläche auf der Projektionsfläche 40 Zeile für Zeile überstreicht, so daß für einen menschlichen Betrachter der Eindruck einer homogen erleuchteten Fläche entsteht, wenn die Lichtemission des Lasers 34 nicht moduliert wird. Durch Ausschalten oder Reduktion der Lichtemission des Lasers 34 gesteuert durch den Prozessor 10 können dunkle Bildbereiche erzeugt werden, auf die der abgelenkte Lichtstrahl 38 nicht oder mit geringerer Intensität trifft.

Vorzugsweise ist die Chipkartenlesevorrichtung 30 bzw. die Chipkartenhalteeinrichtung 32 so ausgebildet, daß der Lichtstrahl 38 nicht beeinträchtigt, d. h. abgelenkt, gestreut oder gedämpft wird, wenn keine Chipkarte 2 in die Chipkartenhalteeinrichtung 32 eingesetzt ist. Dazu weist die Chipkartenhalteeinrichtung 32 beispielsweise im Bereich der Ausbreitungsrichtung des Lichtstrahles 38 eine Aussparung auf, durch die der Lichtstrahl 38 ungehindert hindurchtreten kann. Ferner kann die Chipkartenlesevorrichtung 30 so ausgeführt sein, daß die Chipkartenhalteeinrichtung 32 auf den Lichtausgang des Lasers 34 geklappt werden kann, wenn keine Chipkarte 2 in die Chipkartenhalteeinrichtung 32 eingesetzt ist, so daß die Chipkartenlesevorrichtung 30 beispielsweise näherungsweise die Form eines Stiftes annimmt. Auch in diesem zugeklappten Zustand der Chipkartenlesevorrichtung 30 kann der Lichtstrahl 38 des Lasers 34 aus der Chipkartenlesevorrichtung 30 ungehindert austreten, wenn in der Chipkartenhalteeinrichtung 32 eine entsprechende Öffnung bzw. ein entsprechender Lichtkanal vorgesehen ist. Bei beiden beschriebenen Ausführungsvarianten der Chipkartenlesevorrichtung 30 ist diese als Laserpointer verwendbar, wenn keine Chipkarte 2 in die Chipkartenhalteeinrichtung 32 eingesetzt ist.

Eine weitere Variante der Chipkartenlesevorrichtung 30 weist anstatt des Lasers 34 lediglich eine Lichtquellenhalteeinrichtung auf, mittels derer ein Laserpointer vorübergehend an der Chipkartenhalteeinrichtung 32 angebracht werden kann während die Chipkartenlesevorrichtung 30 als solche verwendet wird. Die Chipkartenlesevorrichtung 30 ist in diesem Fall ein Vorsatz für den Laserpointer, mittels dessen der Laserpointer zur Darstellung von Informationen, die auf einer Chipkarte gespeichert sind, verwendet werden kann. Da der Vorsatz außer ggf. einer mechanischen Halterung und einer einfachen Leistungsversorgung für die Chipkarte 2 keine weiteren Funktionselemente aufweisen muß, kann er klein und sehr preiswert sein und trotzdem ein komfortables und manipulationssicheres Auslesen von Informationen, die auf der Chipkarte gespeichert sind, erlauben. Nachdem durch eine in die Chipkartenhalteeinrichtung 32 eingesetzte Chipkarte 2 Text, Graphik oder andere Daten, welche auf der Chipkarte 2 gespeichert oder durch sie erzeugt wurden, durch die Projektion auf die Projektionsfläche 40 dargestellt wurden, kann der Laserpointer wieder von der Lichtquellenhalteeinrichtung abgenommen werden, um als gewöhnliches Zeigeinstrument zu dienen. Als Lichtquellenhalteeinrichtung kann beispielsweise das Scharnier 36 so ausgebildet sein, daß ein Laserpointer an ihm abnehmbar befestigt werden kann.

Vorzugsweise ist die Chipkartenlesevorrichtung 30, ähnlich wie es in Fig. 2 dargestellt ist, so ausgeführt, daß der Lichtweg von dem Laser 34 über den Spiegel 12 der Chipkarte 2 durch einen Anwender einsehbar ist. Ein Anwender der Chipkartenlesevorrichtung 30 kann sich deshalb jederzeit durch Augenschein davon überzeugen, daß das auf eine Projektionsfläche 40 projizierte Bild ausschließlich durch die Chipkarte 2 erzeugt und nicht durch die Chipkartenlesevorrichtung 30 manipuliert wird.

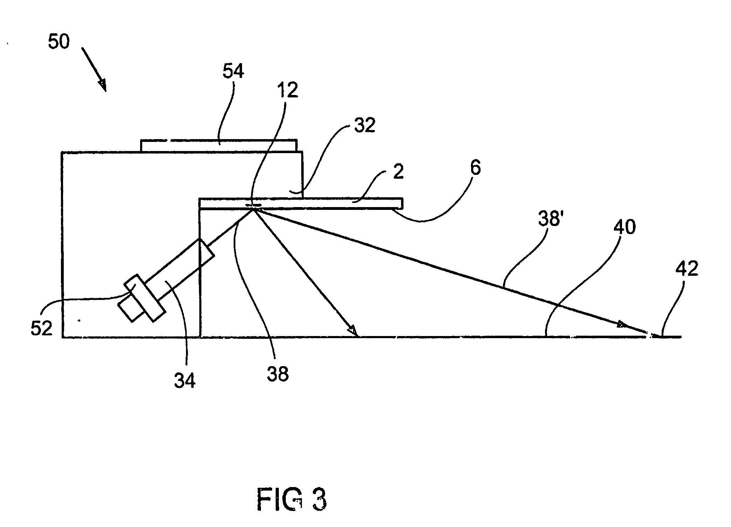

Fig. 3 zeigt eine schematische Darstellung eines weiteren bevorzugten Ausführungsbeispieles einer Chipkartenlesevorrichtung 50, die als Chipkarten-Terminal ausgeführt ist. Die Chipkartenlesevorrichtung 50 weist eine Chipkartenhalteeinrichtung 32 und einen durch eine Lichtquellenhalteeinrichtung 52 gehaltenen Laser 34 auf, die so angeordnet sind, daß ein von dem Laser 34 emittierter Lichtstrahl 38 auf den Spiegel 12 einer Chipkarte 2 trifft, wenn diese in die Chipkartenhalteeinrichtung 32 eingesetzt bzw. von der Chipkartenhalteeinrichtung 32 gehalten ist. Die Chipkartenlesevorrichtung 50 weist ferner eine Projektionsfläche 40 auf, welche gegenüber der zweiten Oberfläche 6 der Chipkarte 2 so angeordnet ist, daß ein durch den Spiegel 12 der Chipkarte 2 abgelenkter Lichtstrahl 38' auf der Projektionsfläche 40 einen Lichtpunkt 42 erzeugt. Ferner weist die Chipkartenlesevorrichtung 50 eine Tastatur 54 auf, über die ein Anwender Daten in Form von Buchstaben oder Zahlen eingeben kann, welche zur Steuerung der Chipkartenlesevorrichtung 50 dienen können oder über die Kontaktfläche 8 der Chipkarte 2 an den Prozessor 10 der Chipkarte 2 übertragen werden können, um so beispielsweise den Anwender mittels einer von diesem einzugebenden Geheimzahl gegenüber der Chipkarte 2 zu authentifizieren oder eine Funktion der Chipkarte 2 auszuwählen. Eine von der Chipkartenhalteeinrichtung 32 gehaltene Chipkarte 2 kann wie in dem vorangehenden, anhand Fig. 2 dargestellten Ausführungsbeispiel, auf der Projektionsfläche 40 ein Bild, das dem Anwender in Form von Text und/oder Graphik Informationen übermittelt, erzeugen.

Auch die Chipkartenlesevorrichtung 50 ist vorzugsweise so ausgebildet, daß der Lichtweg von dem Laser 34 über den Spiegel 12 der Chipkarte 2 zu der Projektionsfläche 40 und insbesondere der Spiegel 12 der Chipkarte durch den Anwender einsehbar sind, so daß sich der Anwender jederzeit davon überzeugen kann, daß das auf die Projektionsfläche 40 projizierte Bild von der Chipkarte 2 erzeugt und nicht durch die Chipkartenlesevorrichtung 50 manipuliert wird.

Die Projektionsfläche 40 kann, wie es oben beschrieben ist, Teil der Chipkartenlesevorrichtung 50 sein, oder, ähnlich wie bei dem in Fig. 2 dargestellten Ausführungsbeispiel eine beliebige, von einem Anwender der Chipkartenlesevorrichtung 50 ausgewählte Flächesein, beispielsweise eine Oberfläche eines Tisches, eine Wand oder ein Blatt Papier.

Während die Chipkartenlesevorrichtung 30 aus Fig. 2 vorzugsweise nur zum Lesen bzw. Darstellen von auf der Chipkarte 2 gespeicherten Daten vorgesehen ist und deshalb keine zusätzliche Anwenderschnittstelle in Form einer Tastatur oder einer Anzeige und auch keine Schnittstelle zu einem Computer oder einem Computernetz aufweist, ist die Chipkartenlesevorrichtung 50 aus Fig. 3 mit der Tastatur 54 ausgestattet, über die ein Anwender Befehle oder Daten eingeben kann, um die Chipkartenlesevorrichtung 50 und/oder die Chipkarte 2 zu steuern oder Daten darin zu speichern. Ferner kann die Chipkartenlesevorrichtung 50, wie auch die Chipkartenlesevorrichtung 30 aus Fig. 2, eine Schnittstelle zu einem Computer oder einem Computernetz aufweisen. Die Chipkartenlesevorrichtung 50 kann als Terminal mit all jenen Funktionen ausgeführt sein, welche ein herkömmliches Terminal aufweist oder einem Anwender zur Verfügung stellt. Darüber hinaus weist sie jedoch den Vorteil auf, daß ein Anwender sich jederzeit davon überzeugen kann, daß auf der Projektionsfläche 40 dargestellter Text oder Graphik von der Chipkarte 2 erzeugt werden, d. h. daß ihm die Chipkartenlesevorrichtung 50 keine falschen Tatsachen vortäuscht.

Ferner kann die Chipkartenlesevorrichtung 50 aus Fig. 3 eine Einrichtung zum Feststellen, ob eine in die Chipkartenhalteeinrichtung 32 eingeführte Chipkarte 2 für die Chipkartenlesevorrichtung 50 zugelassen ist, und eine Einrichtung zum Freigeben des Lasers aufweisen. Wenn ein Anwender eine Chipkarte 2, deren Daten er einsehen will oder deren Funktionen, beispielsweise deren Geldkartenfunktion, er nützen will, in die Chipkartenlesevorrichtung 50 bzw. die Chipkartenhalteeinrichtung 32 einführt, stellt zunächst die Einrichtung zum Feststellen, ob die Chipkarte 2 für die Chipkartenlesevorrichtung zugelassen ist, fest, ob die Chipkarte 2 für die Chipkartenlesevorrichtung 50 zugelassen ist. Die Einrichtung zum Freigeben des Lasers 34 gibt diesen nur frei, wenn die Chipkarte 2 für die Chipkartenlesevorrichtung 50 zugelassen ist. Die Einrichtung zum Freigeben des Lasers 34 kann den Laser freigeben, indem sie die Leistungsversorgung des Lasers 34 anschaltet, eine Blende im Strahlengang des Lasers öffnet oder mittels eines steuerbaren Einkoppelspiegels den Laserstrahl des Lasers 34 auf den Spiegel 12 der Chipkarte 2 lenkt oder indem sie eine Steuerung der Leitstungsversorgung, der Blende oder des Einkoppelspiegels durch die Chipkarte ermöglicht. Dadurch kann beispielsweise ein Mißbrauch der Chipkartenlesevorrichtung 50 verhindert werden.

Abweichend von den in den Fig. 2 und 3 dargestellten Ausführungsbeispielen kann eine Chipkartenlesevorrichtung jedoch auch so ausgeführt sein, daß der Lichtweg vom Laser 34 über den Spiegel 12 der Chipkarte 2 zu der Projektionsfläche 40 nur teilweise oder gar nicht für den Anwender einsehbar ist. Ferner können in dem Lichtweg optische Elemente, wie Linsen oder plane oder gekrümmte Spiegel angeordnet sein, um den Lichtstrahl 38 oder den abgelenkten Lichtstrahl 38' umzulenken, zu fokussieren, aufzuweiten, etc., um die Projektion zu vergrößern, in eine andere Richtung zu lenken oder ihre Qualität zu verbessern. Ferner kann anstatt des Lasers 34 eine andere Lichtquelle verwendet werden, beispielsweise ein Lichtbogen oder eine Glühwendel. Ein Laser weist jedoch den Vorteil auf, daß er Licht mit sehr hoher Intensität und sehr geringer Divergenz emittiert. Der durch den Spiegel 12 der Chipkarte 2 abgelenkten Lichtstrahl 38 erzeugte Lichtpunkt 42 auf der Projektionsfläche 40 ist deshalb auch bei einem großen Abstand zwischen dem Spiegel 12 der Chipkarte 2 und der Projektionsfläche 40 hell und näherungsweise punktförmig, so, daß auf der Projektionsfläche 40 ein helles und für einen Anwender gut sichtbares Bild entsteht, ohne daß eine fokussierende Optik in Form von Linsen und/oder Hohlspiegeln erforderlich ist. Ein Winkel zwischen dem Lichtstrahl 38 und dem Spiegel 12 der Chipkarte 2 ist vorzugsweise größer als 0 Grad und kleiner als 90 Grad, so daß der Lichtstrahl 38 weder streifend auf den Spiegel 12 fällt, noch von diesem in den Laser 34 reflektiert wird. Ein besonders bevorzugter Betrag des Winkels ist 45 Grad, wie es auch in den Fig. 2 und 3 dargestellt ist.

Die Chipkartenhalteeinrichtungen 32 sowohl der Chipkartenlesevorrichtung 30 aus Fig. 2 als auch der Chipkartenlesevorrichtung 50 aus Fig. 3 können auf eine Reihe von Arten ausgeführt sein, um die Chipkarte 2 zu halten. Beispielsweise kann die Chipkartenhalteeinrichtung 32 einen Schlitz aufweisen, in den die Chipkarte 2 teilweise oder ganz eingeführt werden kann, und der so ausgeführt ist, daß der Lichtstrahl 38 von dem Laser 34 auf den Spiegel 12 fallen kann und der von dem Spiegel 12 abgelenkte Lichtstrahl 38' die Chipkartenhalteeinrichtung 32 verlassen kann um auf die Projektionsfläche 40 zu fallen. Dazu kann die Chipkartenhalteeinrichtung 32 eine Öffnung oder ein mit einem zumindest für das von dem Laser 34 emittierte Licht durchlässigen Material abgedecktes Fenster in dem Bereich aufweisen, in dem der Spiegel 12 der Chipkarte 2 angeordnet ist, wenn die Chipkarte 2 in die Chipkartenhalteeinrichtung 32 eingesetzt ist. Andere Ausführungsbeispiele der Chipkartenhalteeinrichtung 32 können mechanische Klammern, eine Ansaugeinrichtung oder einen Magneten zum Halten der Chipkarte 2 mittels Unterdruck bzw. eines Magnetfeldes aufweisen, wobei diese beispielsweise so ausgeführt sein können, daß die zweite Oberfläche 6 der Chipkarte 2 vollkommen offen liegt und unbedeckt ist, wenn die Chipkarte 2 durch die Chipkartenhalteeinrichtung 32 gehalten ist. Vorzugsweise ist die Chipkartenhalteeinrichtung 32 mittels eines oder mehrerer mechanischer Führungen bzw. Anschläge für die Chipkarte 2 so ausgebildet, daß eine Chipkarte 2 bei jedem Einsetzen in die Chipkartenhalteeinrichtung 32 dieselbe definierte Position einnimmt, so daß der Spiegel 12 immer am selben Ort zu liegen kommt und der Lichtstrahl 38 den Spiegel 12 treffen kann.

Bei der Chipkartenlesevorrichtung 30 können die Chipkartenhalteeinrichtung 32 und der Laser 34 statt durch ein Scharnier 36 durch ein starres Bauglied miteinander verbunden sein.

Die Chipkarte 2 kann, wie es in Fig. 1 dargestellt ist, die Kontaktflächen 8 an einer ersten Oberfläche 4 und den Spiegel 12 unter einer zweiten Oberfläche 6 zwischen der ersten Oberfläche 4 und der zweiten Oberfläche 6 aufweisen, so daß der Spiegel der zweiten Oberfläche 6 zugewandt ist und ein Lichtstrahl, der durch eine Öffnung in der zweiten Oberfläche 6 auf den Spiegel 12 fällt, von diesem so abgelenkt wird, daß er durch dieselbe Öffnung oder eine weitere Öffnung in der zweiten Oberfläche 6 die Chipkarte wieder verläßt. Statt dessen können jedoch auch die Kontaktflächen 8 an der selben Oberfläche angeordnet sein, der der Spiegel 12 in der Chipkarte zugewandt ist. Ferner ist ein vollkommen anderer Lichtweg in der Chipkarte 2 möglich, bei dem beispielsweise der Lichtstrahl 38 durch die Öffnung 14 in der zweiten Oberfläche 6 auf den Spiegel 12 fällt, und von diesem so abgelenkt wird, daß der abgelenkte Lichtstrahl 38' durch die erste Oberfläche 4 austritt. Ferner kann die Chipkarte 2 weitere optische Bauelemente, beispielsweise einen weiteren Spiegel, eine Linse oder einen Lichtwellenleiter aufweisen, mittels derer der Lichtstrahl 38 vor oder nach seiner Ablenkung durch den Spiegel 12 umgelenkt, fokussiert, aufgeweitet oder an einen anderen Ort in der Chipkarte 2 geleitet wird. Dabei ist der Spiegel 12 vorzugsweise zwischen der ersten Oberfläche 4 und der zweiten Oberfläche 6 der Chipkarte 2 angeordnet, da er dort auf einfache Weise vor mechanischen Schäden durch äußere Einwirkungen geschützt werden kann. Der Spiegel 12 kann jedoch auch im wesentlichen coplanar mit einer Oberfläche der Chipkarte 2 oder außerhalb der Chipkarte 2 angeordnet sein.

Spiegel 12 und Prozessor 10 können innerhalb der Chipkarte 2 beliebig angeordnet sein, wobei eine elektrische Verbindung zwischen dem Prozessor 10 und dem Aktor 16 und eine mechanische Verbindung zwischen dem Aktor 16 und dem Spiegel 12 besteht, so daß der Prozessor 10 den Spiegel 12 bewegen kann. Da alle Arten von elektrischen Leitungen eine Möglichkeit zur Manipulation bieten sind der Prozessor 10, der Aktor 16 und der Spiegel 12 vorzugsweise in unmittelbarer Nähe zueinander angeordnet oder besonders bevorzugt auf einem einzigen Halbleiterchip integriert. Prozessor 10, Aktor 16 und Spiegel 12 können, wie es in Fig. 1 dargestellt ist, lateral benachbart sein oder aber in Form eines Sandwiches bzw. Stapels zwischen der ersten Oberfläche 4 und der zweiten Oberfläche 6 der Chipkarte 2 angeordnet sein.

Der Aktor 16 kann beispielsweise ein elektrostatischer oder ein piezoelektrischer Aktor sein, wobei der Spiegel 12 vorzugsweise um zwei Achsen dreh- bzw. schwenkbar ist, um eine in zwei zueinander senkrechten Richtung variable Ablenkung des Lichtstrahles 38 und so die Erzeugung eines zweidimensionalen Bildes zu ermöglichen.

Die Chipkarte 2 kann anstatt der in Fig. 1 dargestellten Kontaktflächen 8 eine Kontaktlos-Schnittstelle aufweisen, mittels derer die Chipkarte 2 bzw. der Prozessor 10 mit Leistung versorgt und Daten von und zu der Chipkarte 2 bzw. ihrem Prozessor 10 übertragen werden können. Im Falle der in Fig. 1 dargestellten galvanischen Schnittstelle mittels der Kontaktflächen 8 sind dieselben vorzugsweise an der ersten Oberfläche 4 angeordnet, die von der zweiten Oberfläche 6 mit der Öffnung 14, der der Spiegel 12 zugewandt, ist abgewandt ist.

Die Chipkarte 2 kann einen Speicher und/oder einen Eingang für Bildinformationen aufweisen, die Bestandteil des Prozessors 10 sein können, so daß ein durch den Prozessor 10 mittels des Aktors 16 und des Spiegels 12 projiziertes Bild Bildinformationen aufweisen kann, welche ausschließlich oder teilweise auf der Chipkarte 2 bzw. in dem Prozessor 10 gespeichert sind oder beispielsweise von einem Terminal an die Chipkarte 2 übertragen werden oder vom Prozessor 10 der Chipkarte 2 sowohl aus Daten, die von außen zu der Chipkarte 2 übertragen werden, als auch aus Daten, die in der Chipkarte 2 selbst gespeichert sind, gebildet oder berechnet werden.

Ferner kann die Chipkarte 2 eine eigene Leistungsversorgung , beispielsweise mittels einer Solarzelle oder einer Batterie, aufweisen, so daß eine externe Leistungsversorgung durch die Chipkartenlesevorrichtung 30 oder 50 nicht erforderlich ist. Eine Chipkartenlesevorrichtung für eine solche Chipkarte 2 muß entsprechend keine Leistungsversorgung für die Chipkarte 2 bereitstellen.

Ferner kann die Chipkarte 2 ohne eine Schnittstelle zum Übertragen von Daten ausgeführt sein, wobei sie lediglich zur Darstellung von Informationen, die in der Chipkarte gespeichert sind, vorgesehen ist.

### Bezugszeichenliste

- 2: Chipkarte
- 4: erste Oberfläche
- 6: zweite Oberfläche
- 8: Kontaktfläche
- 10: Prozessor
- 12: Spiegel
- 14: Öffnung
- 16: Aktor
- 18: Substrat
- 30: Chipkartenlesevorrichtung
- 32: Chipkartenhalteeinrichtung
- 34: Laser
- 36: Scharnier/Lichtquellenhalteeinrichtung
- 38: Lichtstrahl
- 40: Projektionsfläche
- 42: Lichtpunkt
- 50: Chipkartenlesevorrichtung
- 52: Lichtquellenhalteeinrichtung
- 54: Tastatur

## Patentansprüche

1. Chipkarte (2) zum Erzeugen einer zweidimensionalen Bild-Projektion, mit folgenden Merkmalen:
einem Substrat (18),
einem Spiegel (12), der um zwei Achsen drehbewegbar bezüglich des Substrats (18) gehalten ist;
einem Aktor (16) zum Bewegen des Spiegels (12) bezüglich des Substrats (18) um die zwei Achsen; und
einem Prozessor (10) zum Verarbeiten von Bildinformationen und zum Ansteuern des Aktors (16), um den Spiegel (12) gemäß den Bildinformationen um die zwei Achsen drehend zu bewegen, und somit die zweidimensionale Bild-Projektion zu erzeugen.

2. Chipkarte nach Anspruch 1, bei der der Aktor (16) an dem Substrat (18) befestigt ist.

3. Chipkarte nach Anspruch 1 oder 2, bei der der Spiegel (12) so an der Chipkarte (2) angeordnet ist, daß er von außen sichtbar ist.

4. Chipkarte (2) nach einem der Ansprüche 1 bis 3, ferner mit einem Speicher für Bildinformationen.

5. Chipkarte (2) nach einem der Ansprüche 1 bis 4, ferner mit einem Eingang für Bildinformationen.

6. Chipkarte (2) nach einem der Ansprüche 1 bis 5, ferner mit einem steuerbaren Lichtverschluß, der in einem Lichtweg angeordnet ist, entlang dessen sich ein Lichtstrahl (38, 38') ausbreiten kann, der auf den Spiegel (12) auftrifft und von dort reflektiert wird.

7. Chipkarte (2) nach einem der Ansprüche 1 bis 6, ferner mit einem elektrischen Kontakt (8), über den die Chipkarte (2) mit einer Lichtquelle (34) verbindbar ist, wobei der Prozessor (10) ferner dafür vorgesehen ist, ein Lichtquellensteuersignal an dem elektrischen Kontakt (8) anzulegen.

8. Chipkarte (2) nach einem der Ansprüche 1 bis 7, bei der der Spiegel (12) einer Oberfläche (6) der Chipkarte (2) zugewandt ist, an der die Chipkarte (2) keine elektrischen Kontakte (8) aufweist.

9. Chipkarte (2) nach einem der Ansprüche 1 bis 8, bei der der Prozessor (10), der Aktor (16) und der Spiegel (12) einstückig ausgeführt sind.

10. Chipkartenlesevorrichtung (30, 50) mit folgenden Merkmalen:
einer Chipkartenhalteeinrichtung (32); und
einer Lichtquellenhalteeinrichtung (36, 52), zum Halten einer Lichtquelle .(34), die einen Lichtstrahl (38) erzeugt,
wobei die Chipkartenhalteeinrichtung (32) und die Lichtquellenhalteeinrichtung (36, 52) so angeordnet sind, daß der Lichtstrahl (38) auf einen Spiegel (12) einer Chipkarte (2) fallen kann, wenn die Chipkarte (2) in der Chipkartenhalteeinrichtung (32) gehalten ist, und daß ein von dem Spiegel (12) reflektierter Lichtstrahl (38') auf eine Projektionsfläche (40) fallen kann, **dadurch gekennzeichnet, daß** die Chipkartenhalteeinrichtung (32) so ausgebildet ist, daß sie die Chipkarte (2) so halten kann, daß der Spiegel (12) von außen sichtbar ist.

11. Chipkartenlesevorrichtung (30, 50) nach Anspruch 10 oder 11, bei der die Chipkartenhalteeinrichtung (32) ferner einen Schlitz aufweist, welcher die Chipkarte (2) nur so weit aufnimmt, daß der Spiegel (12) von außen sichtbar ist.

12. Chipkartenlesevorrichtung (30, 50) nach einem der Ansprüche 10 bis 11, bei der die Chipkartenhalteeinrichtung (32) und die Lichtquellenhalteeinrichtung (36, 52) ferner so ausgebildet sind, daß die Chipkartenhalteeinrichtung (32) die Chipkarte (2) und die Lichtquellenhalteeinrichtung (36, 52) die Lichtquelle (34) so halten können, daß ein Winkel zwischen dem Lichtstrahl (38) und dem Spiegel (12) größer als 0 Grad und kleiner als 90 Grad ist.

13. Chipkartenlesevorrichtung (30, 50) nach Anspruch 12, bei der der Winkel 45 Grad beträgt.

14. Chipkartenlesevorrichtung (30, 50) nach einem der Ansprüche 10 bis 13, bei der die Lichtquelle ein Laser (34) ist.

15. Chipkartenlesevorrichtung (30) nach einem der Ansprüche 10 bis 14, bei der die Lichtquelle ein Laserpointer (34) ist.

16. Chipkartenlesevorrichtung (30) nach einem der Ansprüche 10 bis 15, bei der die Chipkartenhalteeinrichtung (32) und die Lichtquellenhalteeinrichtung (36) so ausgebildet sind; daß die Lichtquellenhalteeinrichtung (36) die Lichtquelle (34) so aufnehmen kann, daß der Lichtstrahl (38) durch die Chipkartenhalteeinrichtung (32) nicht beeinträchtigt wird, wenn keine Chipkarte (2) eingesetzt ist.

17. Chipkartenlesevorrichtung (30) nach einem der Ansprüche 10 bis 16, ferner mit:
einem Diodenlaser (34), der von der Lichtquellenhalteeinrichtung gehalten ist,
wobei die Lichtquellenhalteeinrichtung ein Scharnier (36) aufweist, über das die Chipkartenhalteeinrichtung (32) und dder Diodenlaser bewegbar miteinander verbunden sind.

18. Chipkartenlesevorrichtung (50) nach einem der Ansprüche 10 bis 17, die als Chipkarten-Terminal ausgeführt ist und ferner folgende Merkmale aufweist:
eine Lichtquelle (34), die durch die Lichtquellenhalteeinrichtung (52) gehalten ist;
eine Einrichtung zum Feststellen, ob die Chipkarte (2) für die Chipkartenlesevorrichtung (50) zugelassen ist; und
einer Einrichtung zum Freigeben der Lichtquelle.

## Claims

1. Chip card (2) for generating a two-dimensional image projection, comprising:
a substrate (18),
a mirror (12), which is held rotationally moveable around two axes with reference to the substrate (18);
an actuator (16) for moving the mirror (12) with reference to the substrate (18) around the two axes; and
a processor (10) for processing image information and for driving the actuator (16) in order to move the mirror (12) rotationally around the two axes according to the image information and thus generate the two-dimensional image projection.

2. Chip card according to claim 1, wherein the actuator (16) is mounted to the substrate (18).

3. Chip card according to claim 1 or 2, wherein the mirror (12) is arranged at the chip card (2) so that it is visible from the outside.

4. Chip card (2) according to one of claims 1 to 3, further comprising a memory for image information.

5. Chip card (2) according to one of claims 1 to 4, further comprising an input for image information.

6. Chip card (2) according to one of claims 1 to 5, further comprising a controllable light shutter arranged within a light path along which a light beam (38, 38') may propagate which impinges onto the mirror (12) and is reflected from the same.

7. Chip card (2) according to one of claims 1 to 6, further comprising an electrical contact (8) via which the chip card (2) is connectable to a light source (34), wherein the processor (10) is further provided to apply a light source control signal to the electrical contact (8).

8. Chip card (2) according to one of claims 1 to 7, wherein the mirror (12) faces a surface (6) of the chip card (2) on which the chip card (2) comprises no electrical contacts (8).

9. Chip card (2) according to one of claims 1 to 8, wherein the processor (10), the actuator (16) and the mirror (12) are implemented integrally.

10. Chip card reading device (30, 50), comprising:
a chip card holding means (32); and
a light source holding means (36, 52) for holding a light source (34) generating a light beam (38),
wherein the chip card holding means (32) and the light source holding means (36, 52) are arranged so that the light beam (38) may fall onto a mirror (12) of a chip card (2) when the chip card (2) is held within the chip card holding means (32), and that a light beam (38') reflected by the mirror (12) may fall onto a projection face (40), **characterized in that** the chip card holding means (32) is implemented so that it may hold the chip card (2) so that the mirror (12) is visible from the outside.

11. Chip card reading device (30, 50) according to claim 10, wherein the chip card holding means (32) further comprises a slot which accepts the chip card (12) only so far that the mirror (12) is visible from the outside.

12. Chip card reading device (30, 50) according to one of claims 10 to 11, wherein the chip card holding means (32) and the light source holding means (36, 52) are further implemented so that the chip card holding means (32) may hold the chip card (2) and the light source holding means (36, 52) may hold the light source (34) so that an angle between the light beam (38) and the mirror (12) is greater than 0 degrees and smaller than 90 degrees.

13. Chip card reading device (30, 50) according to claim 12 wherein the angle is 45 degrees.

14. Chip card reading device (30, 50) according to one of claims 10 to 13, wherein the light source is a laser (34).

15. Chip card reading device (30) according to one of claims 10 to 14, wherein the light source is a laser pointer (34).

16. Chip card reading device (30) according to one of claims 10 to 15, wherein the chip card holding means (32) and the light source holding means (36) are implemented so that the light source holding means (36) may accept the light source (34) so that the light beam (38) is not affected by the chip card holding means (32) when no chip card (2) is inserted.

17. Chip card reading device (30) according to one of claims 10 to 16, further comprising:
a diode laser (34) which is held by the light source holding means,
wherein the light source holding means comprises a hinge (36) via which the chip card holding means (32) and the diode laser are moveably connected to each other.

18. Chip card reading device (50) according to one of claims 10 to 17, which is further implemented as a chip card terminal and further comprises:
a light source (34) held by the light source holding means (52);
means for determining whether the chip card (2) is admitted for the chip card reading device (50); and
means for enabling the light source.

## Revendications

1. Carte (2) à puce pour produire une projection d'images bidimensionnelles comportant les caractéristiques suivantes :
un substrat (18) ;
un miroir (12), qui est maintenu mobile en rotation suivant deux axes par rapport au substrat (18) ;
un actionneur (16) pour déplacer le miroir (12) par rapport au substrat (18) suivant les deux axes ; et
un processeur (10) pour traiter des informations d'image et pour commander l'actionneur (16) afin de déplacer en rotation suivant les deux axes le miroir (12) suivant les informations d'image et de produire ainsi la projection d'images bidimensionnelles.

2. Carte à puce suivant la revendication 1, dans laquelle l'actionneur (16) est fixé au substrat (18).

3. Carte à puce suivant la revendication 1 ou 2, dans laquelle le miroir (12) est disposé sur la carte (2) à puce de manière à être visible de l'extérieur.

4. Carte (2) à puce suivant l'une des revendications 1 à 3, comportant de plus une mémoire pour des informations d'image.

5. Carte (2) à puce suivant l'une des revendications 1 à 4, comportant de plus une entrée pour des informations d'image.

6. Carte (2) à puce suivant l'une des revendications 1 à 5, comportant de plus un obturateur de lumière qui peut être commandé et qui est monté dans un trajet lumineux le long duquel peut se propager un rayon (38, 38') lumineux qui arrive sur le miroir (12) et qui y est réfléchi.

7. Carte (2) à puce suivant l'une des revendications 1 à 6, comportant de plus un contact (8) électrique par l'intermédiaire duquel la carte (2) à puce peut être reliée à une source (34) lumineuse, le processeur (10) étant prévu de plus pour appliquer un signal de commande de source lumineuse au contact (8) électrique.

8. Carte (2) à puce suivant l'une des revendications 1 à 7, dans laquelle le miroir (12) est tourné vers une surface (6) de la carte (2) à puce sur laquelle la carte (2) à puce ne comporte pas de contact (8) électrique.

9. Carte (2) à puce suivant l'une des revendications 1 à 8, dans laquelle le processeur (10), l'actionneur (16) et le miroir (12) sont réalisés d'un seul tenant.

10. Dispositif (30, 50) de lecture de carte à puce comportant les caractéristiques suivantes :
un dispositif (32) de maintien de carte à puce ;
et un dispositif (36, 52) de maintien de source lumineuse pour maintenir une source (34) lumineuse qui produit un rayon (38) lumineux,
le dispositif (32) de maintien de carte à puce et le dispositif (36, 52) de maintien de source lumineuse étant montés de telle manière que le rayon (38) lumineux peut être incident sur un miroir (12) d'une carte (2) à puce quand la carte (2) à puce est maintenue dans le dispositif (32) de maintien de carte à puce et de telle manière qu'un rayon (38') lumineux réfléchi par le miroir (12) peut être incident sur une surface (40) de projection, **caractérisé en ce que** le dispositif (32) de maintien de carte à puce est réalisé de telle manière que la carte (2) à puce peut être maintenue de manière à ce que le miroir (12) puisse être vu de l'extérieur.

11. Dispositif (30, 50) de lecture de carte à puce suivant la revendication 10, dans lequel le dispositif (32) de maintien de carte à puce comporte de plus une fente qui ne reçoit la carte (2) à puce que jusqu'au point où le miroir (12) est visible de l'extérieur.

12. Dispositif (30, 50) de lecture de carte à puce suivant l'une des revendications 10 à 11, dans lequel le dispositif (32) de maintien de carte à puce et le dispositif (36, 52) de maintien de source lumineuse sont de plus réalisés de telle manière que le dispositif (32) de maintien de carte à puce peut maintenir la carte (2) à puce et le dispositif (36, 52) de maintien de source lumineuse peut maintenir la source (34) lumineuse de telle manière qu'un angle entre le rayon (38) lumineux et le miroir (12) est supérieur à 0° et inférieur à 90°.

13. Dispositif (30, 50) de lecture de carte à puce suivant la revendication 12, dans lequel l'angle est égal à 45°.

14. Dispositif (30, 50) de lecture de carte à puce suivant l'une des revendications 10 à 13, dans lequel la source lumineuse est un laser (34).

15. Dispositif (30) de lecture de carte à puce suivant l'une des revendications 10 à 14, dans lequel la source lumineuse est un pointeur (34) laser.

16. Dispositif (30) de lecture de carte à puce suivant l'une des revendications 10 à 15, dans lequel le dispositif (32) de maintien de carte à puce et le dispositif (36) de maintien de source lumineuse sont réalisés de telle manière que le dispositif (36) de maintien de source lumineuse peut recevoir la source (34) lumineuse de telle manière que le rayon (38) lumineux n'est pas gêné par le dispositif (32) de maintien de carte à puce quand il n'est pas introduit de cartes (2) à puce.

17. Dispositif (30) de lecture de carte à puce suivant l'une des revendications 10 à 16, comportant de plus
un laser (34) à diode qui est maintenu par le dispositif de maintien de source lumineuse,
le dispositif de maintien de source lumineuse comportant une articulation (36) par l'intermédiaire de laquelle le dispositif (32) de maintien de carte à puce et le laser à diode sont reliés l'un à l'autre en pouvant être déplacés.

18. Dispositif (50) de lecture de carte à puce suivant l'une des revendications 10 à 17, qui est réalisé en terminal de carte à puce et qui comporte de plus les caractéristiques suivantes :
une source (34) lumineuse qui est maintenue par le dispositif (52) de maintien de source lumineuse ;
un dispositif pour déterminer si la carte (2) à puce est admise pour le dispositif (50) de lecture de carte à puce ; et
un dispositif pour dégager la source lumineuse.
